(19) **Europäisches Patentamt**
**European Patent Office**
**Office européen des brevets**

(11) **EP 3 983 582 B1**

(12) **EUROPEAN PATENT SPECIFICATION**

(45) Date of publication and mention
of the grant of the patent:
**24.06.2026 Bulletin 2026/26**

(21) Application number: **20726860.8**

(22) Date of filing: **26.05.2020**

(51) International Patent Classification (IPC):
***D01F 6/30*** (2006.01)      ***C08F 210/06*** (2006.01)
***D01F 8/06*** (2006.01)

(52) Cooperative Patent Classification (CPC):
(C-Sets available)
**D01F 8/06; C08F 210/06; D01F 6/30**      (Cont.)

(86) International application number:
**PCT/EP2020/064489**

(87) International publication number:
**WO 2020/249387 (17.12.2020 Gazette 2020/51)**

(54) **CORE-SKIN FIBER COMPRISING PROPYLENE ETHYLENE RANDOM COPOLYMER**

KERN-MANTEL-FASER UMFASSEND PROPYLENETHYLEN-RANDOM-COPOLYMER

CORE-SHEATH FIBRE COMPRENANT COPOLYMÈRE ALÉATOIRE DE PROPYLÈNE-ÉTHYLÈNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.06.2019 EP 19179505**

(43) Date of publication of application:
**20.04.2022 Bulletin 2022/16**

(73) Proprietor: **Basell Poliolefine Italia S.r.l.**
**20121 Milano (IT)**

(72) Inventors:
• **DE PALO, Roberto**
**44122 Ferrara (IT)**
• **LEMAIRE, Renaud**
**1090 Brussels (BE)**
• **MARTI PORQUERES, Jaume**
**43206 Reus (ES)**

(74) Representative: **LyondellBasell**
**c/o Basell Poliolefine Italia**
**Intellectual Property**
**P.le Donegani 12**
**44122 Ferrara (IT)**

(56) References cited:
**WO-A1-2005/090655      WO-A1-2014/139731**
**WO-A1-2018/177952**

• **S. MISRA ET AL: "Influence of molecular weight distribution on the structure and properties of melt-spun polypropylene filaments", JOURNAL OF APPLIED POLYMER SCIENCE, vol. 56, no. 13, 27 June 1995 (1995-06-27), US, pages 1761 - 1779, XP055641013, ISSN: 0021-8995, DOI: 10.1002/app.1995.070561307**
• **J TOCHACEK ET AL: "Processing stability of polypropylene impact-copolymer during multiple extrusion Effect of polymerization technology", POLYMER DEGRADATION AND STABILITY, BARKING, GB, vol. 96, no. 4, 12 January 2011 (2011-01-12), pages 491 - 498, XP028365389, ISSN: 0141-3910, [retrieved on 20110126], DOI: 10.1016/J.POLYMDEGRADSTAB.2011.01.018**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**(Cont. next page)**

EP 3 983 582 B1

(52) Cooperative Patent Classification (CPC): (Cont.)

C-Sets
**C08F 210/06, C08F 4/6465;**
**C08F 210/16, C08F 2/001;**

**C08F 210/16, C08F 4/6465;**
**C08F 210/16, C08F 4/6492;**
C08F 210/06, C08F 210/16, C08F 2500/12,
C08F 2500/17, C08F 2500/35, C08F 2500/27,
C08F 2500/34

**Description**

FIELD OF THE INVENTION

The present disclosure relates to soft fibers comprising a propylene ethylene random copolymer obtained with a particularly gas phase process.

BACKGROUND OF THE INVENTION

Nonwoven webs or fabrics are desirable for use in a variety of products such as workwear, workwear materials, garments, disposable diapers, and other personal hygiene products, including pre-moistened wipes. Nonwoven webs having high levels of strength, softness, and abrasion resistance are desirable for disposable absorbent garments, such as diapers, incontinence briefs, training pants, feminine hygiene products, and the like. For example, in a disposable diaper, it is highly desirable to have soft, strong, nonwoven components, such as top sheets, back sheet (also known as outer covers). Top sheets form the inner, body- contacting portion of a diaper which makes softness highly beneficial.

WO 2005/111282 teaches nonwoven fabrics made from fibers comprising blends of isotactic polypropylene with a reactor grade propylene based plastomer or elastomer. While these materials demonstrate an improvement of the existing commercial materials, it is desired to have even better softness without sacrificing the physical properties such as tenacity and abrasion resistance. WO 2005/090655 teaches propylene-based copolymers for use in fibres, including melt-spun, spunbond and bicomponent (sheath/core) fibres, and discloses propylene-ethylene copolymers suitable for sheath/core fibre structures in hygiene and nonwoven applications.

However, in textile articles, like in particular non-woven fabrics, especially for articles for personal hygiene it is desirable to obtain articles having high softness.

It has now been found that such goal can be achieved by using a fiber having a particular a skin-core structure wherein the skin comprises a specific propylene ethylene random copolymer having specific structural features being obtained by a particular gas phase process.

SUMMARY OF THE INVENTION

Thus, the present disclosure provides the use of a skin-core fiber wherein the skin comprises

a propylene ethylene copolymer having:

i) xylene soluble fraction at 25°C ranging from 14 wt% to 27 wt%;
ii) intrinsic viscosity of the fraction soluble in xylene at 25°C ranging from 1.0 to 2.4 dl/g;
iii) melt flow rate, MFR, measured according to ISO 1133 at 230 °C with a load of 2.16 kg, ranging from 12 g/10 min to 60 g/10 min;
iv) an ethylene derived units content ranging from 5.0 wt% to 12.0 wt%
v) the ethylene derived units content on the fraction insoluble in xylene at 25°C ranging from 2.5 wt% to 6.0 wt%;
vi) the ethylene derived units content on the fraction soluble in xylene at 2 5°C ranging from 15.2. wt% to 30.2 wt%
vii) the $C^{13}$ NMR sequences PEP measured on the fraction insoluble in xylene at 25°C ranging from 3.5mol% to 5.5mol% and the $C^{13}$ NMR sequences PEP measured on the fraction soluble in xylene at 25°C ranging from 11.0 mol% to 14.2 mol%;

the core of the fiber comprises a homo or copolymer of ethylene having a density comprised between 0.940 g/cm$^3$ to 0.975 g/cm$^3$ wherein the polymeric material forming the core-layer ranges from 50 to 80 wt% and the polymeric material forming the outer skin-layer ranges from 20 wt% to 50 wt%.

DETAILED DESCRIPTION OF THE INVENTION

Thus, the present disclosure provides the use of a skin-core fiber wherein the skin comprises

a propylene ethylene copolymer having:

i) xylene soluble fraction at 25°C ranging from 14 wt% to 27 wt%; preferably from 17 wt% to 25 wt%; more preferably from 18 wt% to 22 wt;
ii) intrinsic viscosity of the fraction soluble in xylene at 25°Cranging from 1.0 to 2.4 dl/g; preferably from 1.5 to 2.2 dl/g; more preferably from 1.7 to 2.1 dl/g;

iii) melt flow rate, MFR, measured according to ISO 1133 at 230 °C with a load of 2.16 kg, ranging from 12.0 g/10 min to 60.0 g/10 min; preferably from 15.0 g/10 min to 50.0 g/10 min; more preferably from 18.6 g/10 min to 30.0 g/10 min;

iv) an ethylene derived units content ranging from 5.0 wt% to 12.0 wt%, preferably from 6.2 wt% to 10.3 wt%.

v) the ethylene derived units content on the fraction insoluble in xylene at 25°C ranging from 2.5 wt% to 6.0 wt%; preferably ranging from 3.2wt% to 5.2wt%; more preferably ranging from 3.5wt% to 5.0wt%;

vi) the ethylene derived units content on the fraction soluble in xylene at 25°C ranging from 15.2. wt% to 30.2 wt%; preferably ranging from 17.2wt% to 24.8wt%; more preferably ranging from 18.2wt% to 22.8wt%;

vii) the $C^{13}$ NMR sequences PEP measured on the fraction insoluble in xylene at 25°C ranging from 3.5 mol% to 5.5mol%; preferably ranging from 3.8mol% to 5.2mol%; more preferably ranging from 3.9mol% to 4.8 mol% and the $C^{13}$ NMR sequences PEP measured on the fraction soluble in xylene at 25°C ranging from 11.0 mol% to 14.2 mol%; preferably ranging from 11.5 mol% to 13.8 mol%; more preferably ranging from 12.3 mol% to 13.5 mol%;

the core of the fiber comprises a homo or copolymer of ethylene having a density comprised between 0.940 g/cm³ to 0.975 g/cm³; preferably comprised between 0.955 g/cm³ and 0.970 g/cm³; more preferably comprised between 0.958 g/cm³ and 0.965 g/cm³, wherein the polymeric material forming the core-layer ranges from 50 to 80 wt% and the polymeric material forming the outer skin-layer ranges from 20 wt% to 50 wt%.

For the present disclosure, the term "copolymer" is referred to polymers containing only two kinds of comonomers, such as propylene and ethylene.

Preferably in the propylene ethylene copolymer the $C^{13}$ NMR sequences PEE measured on the fraction soluble in xylene at 25°C range from 7.2 mol% to 12.0 mol%; preferably range from 8.3 mol% to 11.2 mol%.

Preferably in the propylene ethylene copolymer the $C^{13}$ NMR sequences EEE measured on the fraction soluble in xylene at 25°C are lower than 6.5 mol% preferably in a range from 5.9 mol% to 2.0 mol%

Preferably in the propylene ethylene copolymer the ratio r1r2 of the fraction unsoluble in xylene at 25°C measured with $C^{13}$ NMR is comprised between 2.4 and 4.6; preferably between 2.9 and 4.1; more preferably between 3.1 and 3.8.

Propylene ethylene copolymer is obtained with a process being carried out in a reactor having two interconnected polymerization zones, a riser and a downcomer, wherein the growing polymer particles:

(a) flow through the first of said polymerization zones, the riser, under fast fluidization conditions in the presence of propylene and of ethylene;

(b) leave the riser and enter the second of said polymerization zones, the downcomer, through which they flow downward in a densified form in the presence of propylene and of ethylene, wherein the concentration of ethylene in the downcomer is higher than in the riser;

(c) leave the downcomer and are reintroduced into the riser, thus establishing a circulation of polymer between the riser and the downcomer.

In the first polymerization zone (riser), fast fluidization conditions are established by feeding a gas mixture comprising one or more alpha-olefins at a velocity higher than the transport velocity of the polymer particles. The velocity of said gas mixture is generally comprised between 0.5 and 15 m/s, preferably between 0.8 and 5 m/s. The terms "transport velocity" and "fast fluidization conditions" are well known in the art; for a definition thereof, see, for example, "D. Geldart, Gas Fluidisation Technology, page 155 et seq., J. Wiley & Sons Ltd., 1986".

In the second polymerization zone (downcomer), the polymer particles flow under the action of gravity in a densified form, so that high values of density of the solid (mass of polymer per volume of reactor) are achieved, said density of solid approaching the bulk density of the polymer. Throughout the present description a "densified form" of the polymer implies that the ratio between the mass of polymer particles and the reactor volume is higher than 80% of the "poured bulk density" of the obtained polymer. The "poured bulk density" of a polymer is a parameter well known to the person skilled in the art. In view of the above, it is clear that in the downcomer the polymer flows downward in a plug flow and only small quantities of gas are entrained with the polymer particles.

According to the process of the present disclosure, the two interconnected polymerization zones are operated in such a way that the gas mixture coming from the riser is totally or partially prevented from entering the downcomer by introducing into the upper part of the downcomer a liquid and/or gas stream, denominated "barrier stream", having a composition different from the gaseous mixture present in the riser. In order to comply with this process feature, one or more feeding lines for the barrier stream are placed in the downcomer close to the upper limit of the volume occupied by the polymer particles flowing downward in a densified form.

This liquid/gas mixture fed into the upper part of the downcomer partially replaces the gas mixture entrained with the polymer particles entering the downcomer. The partial evaporation of the liquid in the barrier stream generates in the upper part of the downcomer a flow of gas, which moves counter-currently to the flow of descendent polymer, thus acting as a barrier to the gas mixture coming from the riser and entrained among the polymer particles. The liquid/gas barrier fed to the upper part of the downcomer can be sprinkled over the surface of the polymer particles: the evaporation of the liquid will provide the required upward flow of gas.

The feed of the barrier stream causes a difference in the concentrations of monomers and/or hydrogen (molecular weight regulator) inside the riser and the downcomer, so that a bimodal polymer can be produced.

It is known that in a gas-phase polymerization process the reaction mixture comprises, besides the gaseous monomers, also inert polymerization diluents and chain transfer agents, such as hydrogen, useful to regulate the molecular weight of the obtained polymeric chains. The polymerization diluents are preferably selected from C2-C8 alkanes, preferably propane, isobutane, isopentane and hexane. Propane is preferably used as the polymerization diluent in the gas-phase polymerization of the disclosure, so that liquid propane is unavoidably contained in the barrier stream, which is fed to the upper part of the downcomer.

In one embodiment, the barrier steam comprises:

i. from 10 to 100% by mol of propylene;

ii. from 0 to 80% by mol of ethylene;

iii. from 0 to 30% by mol of propane;

iv. from 0 to 5% by mol of hydrogen.

The above indicated compositions of barrier stream can be obtained from the condensation of a part of the fresh monomers and propane, said condensed part being fed to the upper part of the downcomer in a liquid form. According to an embodiment, the above suitable compositions of barrier stream derive from condensation and/or distillation of part of a gaseous stream continuously recycled to the reactor having two interconnected polymerization zones.

Additional liquid and/or gas of suitable composition can be fed along the downcomer at a point below the barrier stream.

The recycle gas stream is generally withdrawn from a gas/solid separator placed downstream the riser, cooled by passage through an external heat exchanger and then recycled to the bottom of the riser. Of course, the recycle gas stream comprises, besides the gaseous monomers, also the inert polymerization components, such as propane, and chain transfer agents, such as hydrogen. Moreover, the composition of the barrier stream deriving from condensation and/or distillation of the gas recycle stream may be suitably adjusted by feeding liquid make-up monomers and propane before its introduction into the upper part of downcomer.

The operating parameters of temperature and pressure are those that are usual in gas-phase catalytic polymerization processes. For example, in both riser and downcomer the temperature is generally comprised between 60°C and 120°C, while the pressure can range from 5 to 40 bar.

The process for preparing the propylene ethylene copolymer of the present disclosure is carried out in presence of a highly stereospecific heterogeneous Ziegler-Natta catalyst. The Ziegler-Natta catalysts suitable for producing the propylene ethylene copolymer of the disclosure comprise a solid catalyst component comprising at least one titanium compound having at least one titanium-halogen bond and at least an electron-donor compound (internal donor), both supported on magnesium chloride. The Ziegler-Natta catalysts systems further comprise an organo-aluminum compound as essential co-catalyst and optionally an external electron-donor compound.

Suitable catalysts systems are described in the European patents EP45977, EP361494, EP728769, EP 1272533 and in the international patent application WO00163261.

The organo-aluminum compound is preferably an alkyl-Al selected from the trialkyl aluminum compounds such as for example triethylaluminum, triisobutylaluminum, tri-n-butylaluminum, tri-n-hexylaluminum, tri-n-octylaluminum. It is also possible to use mixtures of trialkylaluminum's with alkylaluminum halides, alkylaluminum hydrides or alkylaluminum sesquichlorides such as $AlEt_2Cl$ and $Al_2Et_3Cl_3$.

Preferred external electron-donor compounds include silicon compounds, ethers, esters such as ethyl 4-ethoxybenzoate, amines, heterocyclic compounds and particularly 2,2,6,6-tetramethyl piperidine, ketones and the 1,3-diethers. Another class of preferred external donor compounds is that of silicon compounds of formula $R_a{}^5R_b{}^6Si(OR^7)_c$ where a and b are integer from 0 to 2, c is an integer from 1 to 3 and the sum (a+b+c) is 4; $R^5$, $R^6$, and $R^7$, are alkyl, cycloalkyl or aryl radicals with 1-18 carbon atoms optionally containing heteroatoms. Particularly preferred are methylcyclohexyldimethoxysilane, diphenyldimethoxysilane, methyl-t-butyldimethoxysilane, dicyclopentyldimethoxysilane, 2-ethylpiperidinyl-2-t-butyldimethoxysilane and 1,1,1,trifluoropropyl-2-ethylpiperidinyl-dimethoxysilane and 1,1,1,trifluoropropyl-metil-dimethoxysilane. The external electron donor compound is used in such an amount to give a molar ratio between the organo-aluminum compound and said electron donor compound of from 0.1 to 500;

preferably from 1 to 100; more preferably from 2 to 50.

Without to be bound by a theory it is believed that the particular polymerization process used for obtaining the propylene ethylene copolymer gives rise to a polymer having a particular crystallinity due to the distribution of ethylene in the xylene soluble and insoluble fraction at 25°C.

The propylene ethylene copolymer is usually added with additives and/or peroxides, whenever the latter are necessary to obtain the desired Melt Flow Rate.

The skin-core fibers of the present disclosure are endowed with a particular high value of softness together with good mechanical properties.

The said additives comprise the common additives for olefin polymers, such as pigments, opacifiers, fillers, stabilizers, flame retardants, antacids and whiteners.

By "fibres or filaments having a skin-core structure" is meant herein fibres or filaments having an axially extending interface and comprising at least two components, i.e. at least an inner core and at least an outer skin, said at least two components comprising different polymeric materials and being joined along the axially extending interface. In skin-core fibres or filaments, the skin thickness may be uniform or the skin thickness may not be uniform around the circumference of a fibre or filament cross-section.

Said fibres or filaments having skin-core structure can be produced using conventional melt-spin equipments having eccentric or concentric annular dies.

The skin-core fibres or filaments comprise 50-80% by weight, preferably 55-75% by weight, of polymeric material forming the core-layer and 20-50% by weight, preferably 25-45% by weight, of polymer material forming the outer skin-layer, with respect to the total weight of the fibres or filaments.

In some embodiments, the fibres may have a diameter of 10 to 50 micrometers.

Both the said fibres and articles produced with the fibres are produced according to known methods. In particular, the present fabric can be prepared with the well-known processes for the preparation of spun-bond non-woven fabrics, with which the fibres are spread to form directly a fibre web and calendered so as to obtain the non-woven fabric.

In a typical spunbonding process, the polymer is heated in an extruder to the melting point of the polyolefin composition and then the molten polyolefin composition is pumped under pressure through a spinneret containing a number of orifices of desired diameter, thereby producing filaments of the molten polymer composition and without subjecting the filaments to a subsequent drawing.

The equipment is characterised by the fact that it includes an extruder with a die on its spinning head, a cooling tower an air suction gathering device that uses Venturi tubes.

Underneath this device that uses air speed to control the filaments speed, the filaments are usually gathered over a conveyor belt, where they are distributed forming a web according to well-known methods.

When using typical spunbond machinery, it is usually convenient to apply the following process conditions:

- the output per hole ranges from 0.3-0.8 g/min, preferably from 0.4-0.6 g/min;
- the molten polymer filaments fed from the face of the spinneret are generally cooled by means of an air flow and are solidified as a result of cooling;
- the spinning temperature is generally between 200° and 300° C.

The filaments are then brought by the conveyor belt to the thermal bonding step, which is carried out by calendering through a couple of heated rolls.

When using the present fibres or filaments, the said high balance of mechanical properties is achieved with relatively low thermal bonding temperatures, preferably from 120°C to 170°C.

The fabric can be constituted by monolayer or multilayer non-woven fabrics.

In a preferred embodiment, the non-woven fabric is multilayered and at least one layer comprises fibers formed from said polyolefin composition. The other layer may be obtained by spinning processes other than spunbond and may comprise other types of polymers.

Preferably tenacity in the transverse direction direction (TD) of the non-woven fabric range from 12.0 to 24.0 N, more preferably from 12.5 to 20 N.

Haptics measured according to the method described in the examples section ranges from 12 to 18.

The following examples are given to illustrate, not to limit, the present disclosure:

EXAMPLES

**Xylene-soluble (XS) Fraction at 25 °C**

Xylene Solubles at 25°C have been determined according to ISO 16 152; with solution volume of 250 ml, precipitation at 25°C for 20 minutes, 10 of which with the solution in agitation (magnetic stirrer), and drying at 70°C.

**DSC method for melting point**

Melting point has been measured according to ISO 11357-3, at scanning rate of 20C/min both in cooling and heating, on a sample of weight between 5 and 7 mg., under inert N2 flow. Instrument calibration made with indium

**Glass transition temperature via DMTA (Dynamic Mechanical Thermal Analysis)**

Molded specimens of 76 mm by 13 mm by 1 mm are fixed to the DMTA machine for tensile stress. The frequency of the tension and relies of the sample is fixed at 1 Hz. The DMTA translates the elastic response of the specimen starting from -100 °C to 130 °C. In this way it is possible to plot the elastic response versus temperature. The elastic modulus for a viscoelastic material is defined as E=E'+iE". The DMTA can split the two components E' and E" by their resonance and plot E' vs temperature and E'/E" = tan ($\delta$) vs temperature.
The glass transition temperature Tg is assumed to be the temperature at the maximum of the curve E'/E" = tan ($\delta$) vs temperature.

**Density**

The density of samples was measured according to ISO 1183-1:2012 at 23°C (ISO 1183-1 method A "Methods for determining the density of non-cellular plastics -Part 1: Immersion method, liquid pyknometer method and titration method"; Method A: Immersion method, for solid plastics (except for powders) in void-free form). Test specimens were taken from compression moulded plaques conditioned for 10 days before carrying out the density measure.

**Melt Flow Rate (MFR)**

Measured according to ISO 1133 at 230 °C with a load of 2.16 kg, unless otherwise specified.

**Intrinsic Viscosity (IV)**

The sample is dissolved in tetrahydronaphthalene at 135 °C and then poured into a capillary viscometer. The viscometer tube (Ubbelohde type) is surrounded by a cylindrical glass jacket; this setup allows for temperature control with a circulating thermostatic liquid. The downward passage of the meniscus is timed by a photoelectric device.
The passage of the meniscus in front of the upper lamp starts the counter, which has a quartz crystal oscillator. The meniscus stops the counter as it passes the lower lamp and the efflux time is registered: this is converted into a value of intrinsic viscosity through Huggins' equation (Huggins, M.L., J. Am. Chem. Soc., 1942, 64, 2716) provided that the flow time of the pure solvent is known at the same experimental conditions (same viscometer and same temperature). One single polymer solution is used to determine [$\eta$].

**Ethylene content in the copolymers**

$^{13}$C NMR spectra were acquired on a Bruker AV-600 spectrometer equipped with cryoprobe, operating at 160.91 MHz in the Fourier transform mode at 120 °C.
The peak of the S$\beta\beta$ carbon (nomenclature according to "Monomer Sequence Distribution in Ethylene-Propylene Rubber Measured by 13C NMR. 3. Use of Reaction Probability Mode " C. J. Carman, R. A. Harrington and C. E. Wilkes, Macromolecules, 1977, 10, 536) was used as an internal reference at 29.9 ppm. The samples were dissolved in 1,1,2,2-tetrachloroethane-*d2* at 120 °C with a 8 % wt/v concentration. Each spectrum was acquired with a 90° pulse, and 15 seconds of delay between pulses and CPD to remove $^1$H-$^{13}$C coupling. 512 transients were stored in 32K data points using a spectral window of 9000 Hz.
The assignments of the spectra, the evaluation of triad distribution and the composition were made according to Kakugo ("Carbon-13 NMR determination of monomer sequence distribution in ethylene-propylene copolymers prepared with $\delta$-titanium trichloride-diethyl-aluminum chloride" M. Kakugo, Y. Naito, K. Mizunuma and T. Miyatake, Macromolecules, 1982, 15, 1150) using the following equations:

$$PPP = 100 \ T\beta\beta/S \qquad PPE = 100 \ T\beta\delta/S \qquad EPE = 100 \ T\delta\delta/S$$

$$PEP = 100 \ S\beta\beta/S \qquad PEE = 100 \ S\beta\delta/S \qquad EEE = 100 \ (0.25 \ S\gamma\delta + 0.5 \ S\delta\delta)/S$$

$$S = T\beta\beta + T\beta\delta + T\delta\delta + S\beta\beta + S\beta\delta + 0.25\ S\gamma\delta + 0.5\ S\delta\delta$$

The molar percentage of ethylene content was evaluated using the following equation:

E% mol = 100 * [PEP+PEE+EEE]The weight percentage of ethylene content was evaluated using the following equation:

$$E\%\ wt. = \frac{100 * E\%\ mol * MWE}{E\%\ mol * MWE + P\%\ mol * MWP}$$

where P% mol is the molar percentage of propylene content, while MWE and MWP are the molecular weights of ethylene and propylene, respectively.

The product of reactivity ratio r1r2 was calculated according to Carman (C.J. Carman, R.A. Harrington and C.E. Wilkes, $r_1 r_2 = 1 + \left( \frac{EEE + PEE}{PEP} + 1 \right) - \left( \frac{P}{E} + 1 \right) \left( \frac{EEE + PEE}{PEP} + 1 \right)^{0.5}$ Macromolecules, 1977; 10, 536) as:

The tacticity of Propylene sequences was calculated as mm content from the ratio of the PPP $mmT_{\beta\beta}$ (28.90-29.65 ppm) and the whole $T_{\beta\beta}$ (29.80-28.37 ppm).

**Tenacity and Elongation at break of non-woven fabrics**

Test pieces 50 mm large and about 100 mm long are obtained by cutting the non-woven fabrics, with the longer side in the Machine Direction (MD), corresponding to the direction of movement of the spun-bond conveyor belt, or in the Transverse Direction (TD), perpendicular to the Machine direction. The two opposite 50 mm sides of the sample are fixed to the clamps of an Instron dynamometer (model 1122) and tensioned to break with a crosshead speed of 100 mm/min, the initial distance between the clamps being of 100 mm. The ultimate strength (load at break) and the elongation at break are determined.

Both tenacity and elongation are measured in TD, using the respectively cut test pieces.

**Example 1**

Preparation of the Ziegler-Natta solid catalyst component

The Ziegler-Natta catalyst was prepared according to Example 5, lines 48-55, of the European Patent EP728769B1.

Preparation of the catalyst system - Precontact

Before introducing it into the polymerization reactors, the solid catalyst component described above is contacted with aluminum-triethyl (TEAL) and with the dicyclopentyldimethoxysilane (D donor) under the conditions reported in Table 1.

Prepolymerization

The catalyst system is then subject to prepolymerization treatment at 20°C by maintaining it in suspension in liquid propylene for a residence time of 9 minutes before introducing it into the polymerization reactor.

Polymerization

The polymerization was carried out in gas-phase polymerization reactor comprising two interconnected polymerization zones, a riser and a downcomer, as described in European Patent EP782587. Hydrogen was used as molecular weight regulator. The polymer particles exiting from the polymerization step were subjected to a steam treatment to remove the unreacted monomers and dried under a nitrogen flow.

The main precontact, prepolymerization and polymerization conditions and the quantities of monomers and hydrogen fed to the polymerization reactor are reported in Table 1.

Table 1

| Example 1 | | |
|---|---|---|
| **PRECONTACT** | | |
| Temperature | °C | 15 |
| Residence Time | min | 13 |
| TEAL/catalyst | wt/wt | 8 |
| TEAL/Ext. Donor | g/g | 4 |
| **PREPOLYMERIZATION** | | |
| Temperature | °C | 20 |
| Residence Time | min | 8 |
| **POLYMERIZATION** | | |
| Temperature | bar-g | 65 |
| Pressure | bar-g | 24 |
| Residence Time | min | 111 |
| Split holdup riser | wt% | 40 |
| Split holdup downcomer | wt% | 60 |
| $C_2^-/C_2^- + C3^-$ riser | mol/mol | 0.012 |
| $C_2^-/C_2^- + C3^-$ downcomer | mol/mol | 0.032 |
| $H_2/C_3^-$ riser | mol/mol | 0.026 |
| $H_2/C_2^-$ downcomer | mol/mol | 0.186 |
| H2=hydrogen; C2- = ethylene, C3-= propylene | | |

The polymer obtained according to the above process having an MFR of 2.11 g/10 min has been visbroken to MFR 27.8 g/10 min the characterization of the visbroken polymer is reported in Table 2.

Table 2

| Ex | | **1** |
|---|---|---|
| Ethylene content | Wt% | **7.6** |
| Xylene soluble at 25°C | Wt% | **17.5** |
| Intrinsic viscosity xylene solubles | dl/g | **1.56** |
| MFR | g/10 min | **27.8** |
| Ethylene in the fraction insoluble in xylene at 25°C | Wt% | **4.35** |
| Ethylene in the fraction soluble in xylene at 25°C | Wt% | **24.40** |
| PEP sequences in the fraction insoluble in xylene at 25°C | Mol% | **3.94** |
| PEP sequences in the fraction soluble in xylene at 25°C | Mol% | **12.25** |
| PEE sequences in the fraction soluble in xylene at 25°C | Mol% | **12.89** |
| EEE sequences in the fraction soluble in xylene at 25°C | Mol% | **8.98** |
| r1r2 in the fraction insoluble in xylene at 25°C | | **4.83** |
| Melting point | °C | **142.4** |

**Production of non-woven fabric example 2 and comparative example 3.**

Non-woven fabrics made of concentric skin-core composite filaments were prepared.

In Example 2 the skin being the polymer of example 1 and the core being commercial Hostalen GX5052, ethylene HDPE sold by LyondellBasell having a density of 0.963 g/cm3; in example 3 the skin was made with the polymer of example 1 and the core is the commercial homopolymer Moplen HP561R sold by LyondellBasell. In comparative example 4 the skin was made with commercial Hostalen GX5052, ethylene HDPE sold by LyondellBasell and the core was commercial homopolymer Moplen HP561R sold by Lyondellbasell.

- The polymer materials, were fed to a Reicofil 4 spunbond pilot line, which was run with the following settings and operative conditions:

- core/skin 70/30 (whole diameter : 0.6 mm);

- line speed (m/min) : 214 (17 gsm*) - 73 (50 gsm);

- spinneret : 7377 holes (6827 holes/m);

- gap pre-diffusor (exit): 23 mm;

- Secondary air gap - right/left: 14 mm;

- gap diffusor exit: 75 mm;

- distance above the belt right/left: 131 mm.

  * gsm = grams per square meter.

The thermal bonding was carried out with the hot rolls at the temperatures reported in Table 3.
Thus, non-woven fabrics made of composite filaments with concentric core and skin structure in a weight ratio of 70% of core and 30% of skin.
The mechanical properties of the non-woven fabrics are reported in table 3.

Table 3

| Example | | Ex. 2 | Comp Ex. 3 |
|---|---|---|---|
| Skin | | Ex 1 | **GX5052** |
| Core | | **GX5052** | **HP561R** |
| | | | |
| Thermal bonding temperature | [°C] | 123 | 123 |
| | | | |
| Non-woven properties | | | |
| haptics | | 14.5 | 10.0 |
| Note: TD = Transverse Direction | | | |

From table 3 clearly results that the non-woven of the present disclosure are endowed with better haptics in terms of softness.
**Haptics has been measured with the following method:**
Textile specimens are assessed by a panel of 25 evaluators. Textile materials in foils with dimensions of 40cm x 40cm have been used. The specimens are identified with a code (anonymous) that does not reflect the name of the parent material. Each specimen has been used for one evaluation for each member of the panel.
Two fabric extremes for the characteristic of interest have been chosen and to such specimen extremes arbitrary numerical values have been assigned (a scale from 0 to 10 ). Specimens to be evaluated could then be assigned values within the established numerical scale, according to the differences felt.
Kendall coefficient of concordance W has been used to check if the concordance among the evaluators can be considered acceptable by using the following formula

$$W = \frac{12 \cdot \left[\sum_{j=1}^{n} (R_j - \bar{R})^2\right]}{r^2 n(n-1)(n+1)}$$

where Rj is the sum of ranks given to each fabric sample; is the mean value of rank sum; r is the number of evaluators and n is the number of specimens. When the value of W is greater of 0.61, the concordance among the evaluators can be considered acceptable.

The features evaluated were the following:

| Characteristic | Definition | Subjective assessment technique |
|---|---|---|
| Hardness/Softness | Resistance of compression | Compress the sample with the hands. |

An average of all the evaluations has been calculated.

## Claims

1. Use of a propylene ethylene copolymer as skin for a skin core fiber, wherein said propylene ethylene copolymer having:

   i) xylene soluble fraction at 25°C ranging from 14 wt% to 27 wt%
   ii) intrinsic viscosity of the fraction soluble in xylene at 25°C ranging from 1.0 to 2.4 dl/g;
   iii) melt flow rate, MFR, measured according to ISO 1133 at 230 °C with a load of 2.16 kg, ranging from 12 g/10 min to 60.0 g/10 min;
   iv) an ethylene derived units content ranging from 5.0 wt% to 12.0 wt%
   v) the ethylene derived units content on the fraction insoluble in xylene at 25°C ranging from 2.5 wt% to 6.0 wt%;
   vi) the ethylene derived units content on the fraction soluble in xylene at 25°C ranging from 15.2. wt% to 30.2 wt%;
   vii) the $C^{13}$ NMR sequences PEP measured on the fraction insoluble in xylene at 25°C ranging from 3.5mol% to 5.5mol% and the $C^{13}$ NMR sequences PEP measured on the fraction soluble in xylene at 25°C ranging from 11.0 mol% to 14.2 mol%;
   the core of the fiber comprises a homo or copolymer of ethylene having a density comprised between 0.940 g/cm$^3$ to 0.975 g/cm$^3$; wherein all parameters are measured according to the methods in the description;
   wherein the polymeric material forming the core-layer ranges from 50 to 80 wt% and the polymeric material forming the outer skin-layer ranges from 20 wt% to 50 wt%.

2. Use of a propylene ethylene copolymer according to claim 1 wherein in the propylene ethylene copolymer the xylene soluble fraction at 25 °C ranges from 17 wt% to 25 wt% ; wherein xylene soluble fraction at 25 °C is measured according to the method in the description.

3. Use of a propylene ethylene copolymer according to anyone of claims 1-2 wherein in the propylene ethylene copolymer the intrinsic viscosity of the fraction soluble in xylene at 25 °C ranges from 1.5 to 2.2 dl/g; wherein the intrinsic viscosity is measurand according to the method in the description.

4. Use of a propylene ethylene copolymer according of claims 1-3 wherein in the propylene ethylene copolymer the melt flow rate, MFR, measured according to ISO 1133 at 230 °C with a load of 2.16 kg, ranges from 15.0 g/10 min to 50.0 g/10 min.

5. Use of a propylene ethylene copolymer according to anyone of claims 1-4 wherein in the propylene ethylene copolymer the $C^{13}$ NMR sequences PEP measured on the fraction insoluble in xylene at 25°C ranges from 3.8mol% to 5.2mol%; and the $C^{13}$ NMR sequences PEP measured on the fraction soluble in xylene at 25°C ranges from 11.5 mol% to 13.8 mo ; wherein the $C^{13}$ NMR sequences PEP is measured according to the method in the description.

6. Use of a propylene ethylene copolymer according to anyone of claims 1-5 wherein in the propylene ethylene copolymer the $C^{13}$ NMR sequences PEP measured on the fraction insoluble in xylene at 25°C ranges 3.9mol% to 4.8

mol%; and the C$^{13}$ NMR sequences PEP measured on the fraction soluble in xylene at 25°C ranges 12.3 mol% to 13.5 mol% ; wherein the C$^{13}$ NMR sequences PEP is measured according to the method in the description.

7. Use of a propylene ethylene copolymer according to anyone of claims 1-6 wherein in the propylene ethylene copolymer the ethylene derived units content on the fraction insoluble in xylene at 25°C ranges from 3.2 wt% to 5.2 wt%; ; wherein the insoluble in xylene at 25°C is measured according to the method in the description.

8. Use of a propylene ethylene copolymer according to anyone of claims 1-7 wherein in the propylene ethylene copolymer the ethylene derived units content on the fraction soluble in xylene at 25°C ranges from 17.2 wt% to 24 8. w%; wherein the soluble in xylene at 25°C is measured according to the method in the description.

9. Use of a propylene ethylene copolymer according to anyone of claims 1-8 wherein in the propylene ethylene copolymer the C$^{13}$ NMR sequences PEE measured on the fraction soluble in xylene at 25°C range from 7.2 mol% to 12.0 mol%; wherein the C$^{13}$ NMR sequences PEE is measured according to the method in the description.

10. Use of a propylene ethylene copolymer according to anyone of claims 1-9 wherein in the propylene ethylene copolymer the C$^{13}$ NMR sequences EEE measured on the fraction soluble in xylene at 25°C are lower than 6.5 mol%; ; wherein the C$^{13}$ NMR sequences EEE is measured according to the method in the description.

11. Use of a propylene ethylene copolymer according to anyone of claims 1-10 wherein in the propylene ethylene copolymer the ratio r1/r2 of the fraction unsoluble in xylene at 25°C measured with C$^{13}$ NMR is comprised between 2.4 and 4.6

12. Use of a propylene ethylene copolymer according to anyone of claims 1-11 wheren the core layer comprises homo or copolymer of ethylene having a density comprised comprised between 0.955 g/cm$^3$ and 0.970 g/cm$^3$ ; wherein the density is measured according to the method in the description.

13. Use of a propylene ethylene copolymer according to anyone of claims 1-12 wherein the core layer comprises homo or copolymer of ethylene having a density comprised between 0.958 g/cm$^3$ and 0.965 g/cm$^3$ **;** wherein the density is measured according to the method in the description.


**Patentansprüche**

1. Verwendung von Propylen-Ethylen-Copolymer als Mantel für eine Mantel-Kern-Faser, wobei das Propylen-Ethylen-Copolymer folgendes aufweist:

   i) eine in Xylol bei 25 °C lösliche Fraktion im Bereich von 14 Gew.% bis 27 Gew.%;
   ii) eine Grenzviskosität der in Xylol bei 25 °C löslichen Fraktion im Bereich von 1,0 bis 2,4 dl/g;
   iii) eine Schmelzflussrate, MFR, gemessen gemäß ISO 1133 bei 230 °C unter einer Last von 2,16 kg, im Bereich von 12 g/10 min bis 60,0 g/10 min;
   iv) einen Gehalt an von Ethylen abgeleiteten Einheiten im Bereich von 5,0 Gew.% bis 12,0 Gew.%;
   v) einen Gehalt an von Ethylen abgeleiteten Einheiten in der in Xylol bei 25 °C unlöslichen Fraktion im Bereich von 2,5 Gew.% bis 6,0 Gew.%;
   vi) einen Gehalt an von Ethylen abgeleiteten Einheiten in der in Xylol bei 25 °C löslichen Fraktion im Bereich von 15,2 Gew.% bis 30,2 Gew.%;
   vii) die C$^{13}$-NMR-Sequenzen PEP, gemessen an der in Xylol bei 25 °C unlöslichen Fraktion, liegen im Bereich von 3,5 Mol.% bis 5,5 Mol.%, und die C$^{13}$-NMR-Sequenzen PEP, gemessen an der in Xylol bei 25 °C löslichen Fraktion, liegen im Bereich von 11,0 Mol.% bis 14,2 Mol.%;
   wobei der Kern der Faser ein Homo- oder Copolymer von Ethylen mit einer Dichte zwischen 0,940 g/cm$^3$ und 0,975 g/cm$^3$ umfasst; wobei alle Parameter gemäß den Verfahren in der Beschreibung gemessen sind;
   wobei das die Kernschicht bildende polymere Material im Bereich von 50 bis 80 Gew.% liegt, und das die äußere Mantelschicht bildende polymere Material im Bereich von 20 Gew.% bis 50 Gew.% liegt.

2. Verwendung von Propylen-Ethylen-Copolymer nach Anspruch 1, wobei die in Xylol bei 25 °C lösliche Fraktion in dem Propylen-Ethylen-Copolymer im Bereich von 17 Gew.% bis 25 Gew.% liegt; wobei die in Xylol bei 25 °C lösliche Fraktion gemäß dem Verfahren in der Beschreibung gemessen wird.

3. Verwendung von Propylen-Ethylen-Copolymer nach einem der Ansprüche 1 bis 2, wobei die Grenzviskosität der in Xylol bei 25 °C löslichen Fraktion des Propylen-Ethylen-Copolymers im Bereich von 1,5 bis 2,2 dl/g liegt; wobei die Grenzviskosität gemäß dem Verfahren in der Beschreibung gemessen wird.

4. Verwendung von Propylen-Ethylen-Copolymer nach einem der Ansprüche 1 bis 3, wobei die gemäß ISO 1133 bei 230 °C unter einer Last von 2,16 kg gemessene Schmelzflussrate, MFR, des Propylen-Ethylen-Copolymers im Bereich von 15,0 g/10 min bis 50,0 g/10 min liegt.

5. Verwendung von Propylen-Ethylen-Copolymer nach einem der Ansprüche 1 bis 4, wobei in dem Propylen-Ethylen-Copolymer die $C^{13}$-NMR-Sequenzen PEP, gemessen an der in Xylol bei 25 °C unlöslichen Fraktion, im Bereich von 3,8 Mol.% bis 5,2 Mol.% liegen, und die $C^{13}$-NMR-Sequenzen PEP, gemessen an der in Xylol bei 25 °C löslichen Fraktion, im Bereich von 11,5 Mol.% bis 13,8 Mol.% liegen; wobei die $C^{13}$-NMR-Sequenzen PEP gemäß dem Verfahren in der Beschreibung gemessen werden.

6. Verwendung von Propylen-Ethylen-Copolymer nach einem der Ansprüche 1 bis 5, wobei in dem Propylen-Ethylen-Copolymer die $C^{13}$-NMR-Sequenzen PEP, gemessen an der in Xylol bei 25 °C unlöslichen Fraktion, im Bereich von 3,9 Mol.% bis 4,8 Mol.% liegen, und die $C^{13}$-NMR-Sequenzen PEP, gemessen an der in Xylol bei 25 °C löslichen Fraktion, im Bereich von 12,3 Mol.% bis 13,5 Mol.% liegen; wobei die $C^{13}$-NMR-Sequenzen PEP gemäß dem Verfahren in der Beschreibung gemessen werden.

7. Verwendung von Propylen-Ethylen-Copolymer nach einem der Ansprüche 1 bis 6, wobei in dem Propylen-Ethylen-Copolymer der Gehalt an von Ethylen abgeleiteten Einheiten in der in Xylol bei 25 °C unlöslichen Fraktion im Bereich von 3,2 Gew.% bis 5,2 Gew.% liegt; wobei das in Xylol bei 25 °C unlösliche Material gemäß dem Verfahren in der Beschreibung gemessen wird.

8. Verwendung von Propylen-Ethylen-Copolymer nach einem der Ansprüche 1 bis 7, wobei der Gehalt an von Ethylen abgeleiteten Einheiten in der in Xylol bei 25 °C löslichen Fraktion in dem Propylen-Ethylen-Copolymer im Bereich von 17,2 Gew.% bis 24,8 Gew.% liegt; wobei das in Xylol bei 25 °C lösliche Material gemäß dem Verfahren in der Beschreibung gemessen wird.

9. Verwendung von Propylen-Ethylen-Copolymer nach einem der Ansprüche 1 bis 8, wobei in dem Propylen-Ethylen-Copolymer die $C^{13}$-NMR-Sequenz PEE, gemessen an der in Xylol bei 25 °C löslichen Fraktion, im Bereich von 7,2 Mol.% bis 12,0 Mol.% liegt; wobei die $C^{13}$-NMR-Sequenzen PEE gemäß dem Verfahren in der Beschreibung gemessen werden.

10. Verwendung von Propylen-Ethylen-Copolymer nach einem der Ansprüche 1 bis 9, wobei in dem Propylen-Ethylen-Copolymer die $C^{13}$-NMR-Sequenzen EEE, gemessen an der in Xylol bei 25 °C löslichen Fraktion, niedriger als 6,5 Mol.% sind; wobei die $C^{13}$-NMR-Sequenzen EEE gemäß dem Verfahren in der Beschreibung gemessen werden.

11. Verwendung von Propylen-Ethylen-Copolymer nach einem der Ansprüche 1 bis 10, wobei in dem Propylen-Ethylen-Copolymer das Verhältnis r1/r2 der in Xylol bei 25 °C unlöslichen Fraktion, gemessen mit $C^{13}$-NMR, zwischen 2,4 und 4,6 liegt.

12. Verwendung von Propylen-Ethylen-Copolymer nach einem der Ansprüche 1 bis 11, wobei die Kernschicht Homo- oder Copolymer von Ethylen mit einer Dichte zwischen 0,955 g/cm$^3$ und 0,970 g/cm$^3$ umfasst; wobei die Dichte gemäß dem Verfahren in der Beschreibung gemessen wird.

13. Verwendung von Propylen-Ethylen-Copolymer nach einem der Ansprüche 1 bis 12, wobei die Kernschicht Homo- oder Copolymer von Ethylen mit einer Dichte zwischen 0,958 g/cm$^3$ und 0,965 g/cm$^3$ aufweist; wobei die Dichte gemäß den Verfahren in der Beschreibung gemessen wird.

**Revendications**

1. Utilisation d'un copolymère de propylène-éthylène comme gaine pour une fibre gaine-noyau, dans laquelle ledit copolymère de propylène-éthylène présente :

   i) une fraction soluble dans le xylène à 25 °C située dans la plage de 14 % en poids à 27 % en poids ;

ii) une viscosité intrinsèque de la fraction soluble dans le xylène à 25 °C située dans la plage de 1,0 à 2,4 dl/g ;

iii) un indice de fluidité à chaud, MFR, mesuré selon la norme ISO 1133 à 230 °C sous une charge de 2,16 kg, situé dans la plage de 12 g/10 min à 60,0 g/10 min ;

iv) une teneur en motifs dérivés de l'éthylène située dans la plage de 5,0 % en poids à 12,0 % en poids ;

v) la teneur en motifs dérivés de l'éthylène sur la fraction insoluble dans le xylène à 25 °C étant située dans la plage de 2,5 % en poids à 6,0 % en poids ;

vi) la teneur en motifs dérivés de l'éthylène sur la fraction soluble dans le xylène à 25 °C étant située dans la plage de 15,2 % en poids à 30,2 % en poids ;

vii) les séquences PEP par $^{13}$C-RMN mesurées sur la fraction insoluble dans le xylène à 25 °C étant situées dans la plage de 3,5 % en mole à 5,5 % en mole et les séquences PEP par $^{13}$C-RMN mesurées sur la fraction soluble dans le xylène à 25 °C étant situées dans la plage de 11,0 % en mole à 14,2 % en mole ;

le noyau de la fibre comprend un homopolymère ou un copolymère d'éthylène présentant une masse volumique située entre 0,940 g/cm$^3$ et 0,975 g/cm$^3$; tous les paramètres étant mesurés selon les méthodes dans la description ;

le matériau polymère formant la couche de noyau représentant 50 à 80 % en poids et le matériau polymère formant la couche de gaine externe représentant 20 % en poids à 50 % en poids.

2. Utilisation d'un copolymère de propylène-éthylène selon la revendication 1, dans laquelle, dans le copolymère de propylène-éthylène, la fraction soluble dans le xylène à 25 °C est située dans la plage de 17 % en poids à 25 % en poids, la fraction soluble dans le xylène à 25 °C étant mesurée selon la méthode dans la description.

3. Utilisation d'un copolymère de propylène-éthylène selon l'une quelconque des revendications 1-2, dans laquelle, dans le copolymère de propylène-éthylène, la viscosité intrinsèque de la fraction soluble dans le xylène à 25 °C est située dans la plage de 1,5 à 2,2 dl/g ; la viscosité intrinsèque étant mesurée selon la méthode dans la description.

4. Utilisation d'un copolymère de propylène-éthylène selon l'une quelconque des revendications 1-3, dans laquelle, dans le copolymère de propylène-éthylène, l'indice de fluidité à chaud, MFR, mesuré selon la norme ISO 1133 à 230 °C sous une charge de 2,16 kg, est situé dans la plage de 15,0 g/10 min à 50,0 g/10 min.

5. Utilisation d'un copolymère de propylène-éthylène selon l'une quelconque des revendications 1-4, dans laquelle, dans le copolymère de propylène-éthylène, les séquences PEP par $^{13}$C-RMN mesurées sur la fraction insoluble dans le xylène à 25°C sont situées dans la plage de 3,8 % en mole à 5,2 % en mole ; et les séquences PEP par $^{13}$C-RMN mesurées sur la fraction soluble dans le xylène à 25°C sont situées dans la plage de 11,5 % en mole à 13,8 % en mole ; les séquences PEP par $^{13}$C-RMN étant mesurées selon la méthode dans la description.

6. Utilisation d'un copolymère de propylène-éthylène selon l'une quelconque des revendications 1-5, dans laquelle, dans le copolymère de propylène-éthylène, les séquences PEP par $^{13}$C-RMN mesurées sur la fraction insoluble dans le xylène à 25°C sont situées dans la plage de 3,9 % en mole à 4,8 % en mole ; et les séquences PEP par $^{13}$C-RMN mesurées sur la fraction soluble dans le xylène à 25°C sont situées dans la plage de 12,3 % en mole à 13,5 % en mole ; les séquences PEP par $^{13}$C-RMN étant mesurées selon la méthode dans la description.

7. Utilisation d'un copolymère de propylène-éthylène selon l'une quelconque des revendications 1-6, dans laquelle, dans le copolymère de propylène-éthylène, la teneur en motifs dérivés de l'éthylène sur la fraction insoluble dans le xylène à 25°C est située dans la plage de 3,2 % en poids à 5,2 % en poids ; la fraction insoluble dans le xylène à 25°C étant mesurée selon la méthode dans la description.

8. Utilisation d'un copolymère de propylène-éthylène selon l'une quelconque des revendications 1-7, dans laquelle, dans le copolymère de propylène-éthylène, la teneur en motifs dérivés de l'éthylène sur la fraction soluble dans le xylène à 25°C est située dans la plage de 17,2 % en poids à 24,8 % en poids ; la fraction soluble dans le xylène à 25°C étant mesurée selon la méthode dans la description.

9. Utilisation d'un copolymère de propylène-éthylène selon l'une quelconque des revendications 1-8, dans laquelle, dans le copolymère de propylène-éthylène, les séquences PEE par $^{13}$C-RMN mesurées sur la fraction soluble dans le xylène à 25°C sont situées dans la plage de 7,2 % en mole à 12,0 % en mole ; les séquences PEE par $^{13}$C-RMN étant mesurées selon la méthode dans la description.

10. Utilisation d'un copolymère de propylène-éthylène selon l'une quelconque des revendications 1-9, dans laquelle, dans le copolymère de propylène-éthylène, les séquences EEE par $^{13}$C-RMN mesurées sur la fraction soluble dans le xylène à 25°C sont inférieures à 6,5 % en mole ; les séquences EEE par $^{13}$C-RMN étant mesurées selon la méthode dans la description.

11. Utilisation d'un copolymère de propylène-éthylène selon l'une quelconque des revendications 1-10, dans laquelle, dans le copolymère de propylène-éthylène, le rapport r1/r2 de la fraction insoluble dans le xylène à 25 °C, mesuré par $^{13}$C-RMN, est situé entre 2,4 et 4,6.

12. Utilisation d'un copolymère de propylène-éthylène selon l'une quelconque des revendications 1-11, dans laquelle la couche de noyau comprend un homopolymère ou un copolymère d'éthylène présentant une masse volumique située entre 0,955 g/cm$^3$ et 0,970 g/cm$^3$; la masse volumique étant mesurée selon la méthode dans la description.

13. Utilisation d'un copolymère de propylène-éthylène selon l'une quelconque des revendications 1-12, dans laquelle la couche de noyau comprend un homopolymère ou un copolymère d'éthylène présentant une masse volumique située entre 0,958 g/cm$^3$ et 0,965 g/cm$^3$; la masse volumique étant mesurée selon la méthode dans la description.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005111282 A
- WO 2005090655 A
- EP 45977 A
- EP 361494 A
- EP 728769 A
- EP 1272533 A
- WO 00163261 A
- EP 728769 B1
- EP 782587 A

**Non-patent literature cited in the description**

- **D. GELDART**. Gas Fluidisation Technology. J. Wiley & Sons Ltd, 1986, 155
- **HUGGINS, M.L**. *J. Am. Chem. Soc.*, 1942, vol. 64, 2716
- **C. J. CARMAN** ; **R. A. HARRINGTON** ; **C. E. WILKES**. Monomer Sequence Distribution in Ethylene-Propylene Rubber Measured by C NMR. 3. Use of Reaction Probability Mode. *Macromolecules*, 1977, vol. 10, 536
- **M. KAKUGO** ; **Y. NAITO** ; **K. MIZUNUMA** ; **T. MIYATAKE**. Carbon-13 NMR determination of monomer sequence distribution in ethylene-propylene copolymers prepared with $\delta$-titanium trichloride-diethyl-aluminum chloride. *Macromolecules*, 1982, vol. 15, 1150